# EUROPEAN PATENT APPLICATION

(11) **EP 3 542 971 A2**
(43) Date of publication of application: **25.09.2019**
(21) Application number: 18214015.2
(22) Date of filing: 19.12.2018
(51) Int. Cl.: B25J 9/16

(54) **GENERATING LEARNED KNOWLEDGE FROM AN EXECUTABLE DOMAIN MODEL**

(30) Priority: 20.03.2018 US 201862645361 P
(71) Applicant: Siemens Aktiengesellschaft, 80333 München (DE)
(72) Inventor: MCDANIEL, Richard Gary, Hightstown, NJ 08520 (US); QUIROS ARAYA, Gustavo Arturo, Princeton, NJ 08540 (US); FRADKIN, Dmitriy, Wayne, PA 19087 (US)
(74) Representative: Isarpatent

(57) **Abstract**

A computer-implemented method for performing autonomous operations in an operating environment includes simulating the operating environment to generate a plurality of examples. Each example comprises (a) signal data describing a scene, (b) one or more objects present in the scene, and (c) a description of characteristics associated with the objects. A machine learning model is trained using the examples to generate a data structure comprising (i) objects associated with a signal and (ii) characteristics corresponding to the objects associated with the signal. A signal sensor of an autonomous device collects an input signal describing a new scene. The machine learning model is used to generate an output data structure based on the input signal. One or more objects are identified using the output data structure. One or more actions are generated for operating the autonomous device based on the characteristics associated with the identified objects.

## Description

### CROSS-REFERENCE TO RELATED APPLICATIONS

This application claims the benefit of U.S. Provisional Application Serial No. 62/645,361 filed March 20, 2018, which is incorporated herein by reference in its entirety.

### TECHNICAL FIELD

The present disclosure relates generally to methods, systems, and apparatuses related to the generating learned knowledge from an executable domain model. The disclosed techniques may be applied to, for example, automated robotic systems used in industrial applications.

### BACKGROUND

Developing industrial systems that show more intelligent behavior and can act autonomously with limited user support is an active field and is rapidly becoming commonplace. Owners want their factories to run longer and more efficiently to reduce costs. Machines that make fewer errors and can recognize and solve problems on their own, will help to keep processes running. An autonomous machine can also be more easily integrated into a process where tasks were ordinarily performed by human labor such as carrying loose goods or tending to other machines that are not automated. A machine that can handle diverse tasks without requiring lengthy reprogramming effort can also be re-assigned to produce new products more quickly.

To develop industrial devices that can act with autonomy requires their behavior to be developed using new processes. Ordinarily, the process engineer would personally write code using low- level programming languages such as the IEC61131 standard. Similarly, data blocks would be hand designed with an emphasis on the simple numeric and binary input and output values that the controller produces. Modern, complex machinery such as robotics and transportation systems already do not use IEC61131. Instead, the actual control is programmed into the device itself using a network interface for communication. To program a machine that acts autonomously, one must provide means to represent an even more detailed model of the world that allows algorithms to search the data more generally and produce novel behaviors on their own.

In machine learning (ML), a great deal of effort has been focused on many diverse fields. The basis of ML is still generalizing a function using a set of examples as input. Once a function is learned, the system is put to work on new data for which the learned statistical model produces a result. Identifying objects from images is a common task. The usual function is to pick a single word that most represents the content of a 2D image such as a picture or a drawing. In this way, conventional automation systems generally only use ML for generating a limited set of symbolic commands. For example, a robot can be coded to respond to an image by moving in a particular direction. However, conventional machine learned algorithms lack the ability to truly understand the characteristics of the objects that are present in an image. Without this knowledge, the capabilities of devices are limited to hardcoded logic and the devices lack the ability to truly execute tasks in an autonomous manner.

### SUMMARY

Embodiments of the present invention address and overcome one or more of the above shortcomings and drawbacks, by providing methods, systems, and apparatuses related to generating learned knowledge from an executable domain model. More specifically, the techniques described herein use a World Model (WM) containing complex models representing multiple domains to inform and train a Machine Learning (ML) system. The learned ML system functions as a bridge between the real world and the World Model, enabling perception and thereby supporting action planning.

According to some embodiments of the present invention, a computer-implemented method for performing autonomous operations in an operating environment includes simulating the operating environment to generate a plurality of examples. Each example comprises (a) signal data describing a scene, (b) one or more objects present in the scene, and (c) a description of characteristics associated with the objects. A machine learning model is trained using the examples to generate a data structure comprising (i) objects associated with a signal and (ii) characteristics corresponding to the objects associated with the signal. A signal sensor of an autonomous device collects an input signal describing a new scene. The machine learning model is used to generate an output data structure based on the input signal. One or more objects are identified using the output data structure. One or more actions are generated for operating the autonomous device based on the characteristics associated with the identified objects.

According to other embodiments, a system for performing autonomous operations in an operating environment comprising a plurality of objects comprises a server computer and one or more autonomous devices. The server computer executes a machine learning model trained to generate a data structure comprising (i) objects associated with a signal and (ii) characteristics corresponding to the objects associated with the signal. The autonomous device comprises a non-transitory computer readable medium, one or more sensors, a networking card, and a processor. The non-transitory computer readable medium stores a world model used by the autonomous device to tasks requiring use of at least one of the objects. The sensors collect signal data describing a scene associated with the operating environment. The networking card enables a connection with the server computer. The processor is configured to (a) send the signal data to the server computer, (b) receive a corresponding data structure generated by the machine learning model from the server computer, and (c) update the world model based on the corresponding data structure.

According to other embodiments, a system for performing autonomous operations in an operating environment comprising a plurality of objects comprises one or more autonomous devices. Each autonomous device comprises one or more sensors, a long-term non-transitory computer readable medium, a short-term non-transitory computer readable medium, and a processor. The sensors collect signal data describing a scene associated with the operating environment. The long-term non-transitory computer readable medium stores a machine learning model trained to generate a data structure comprising (i) objects associated with a signal and (ii) characteristics corresponding to the objects associated with the signal. The short-term non-transitory computer readable medium stores a world model that comprises sparse representations of the objects in the operating environment. The processor is configured to (a) execute the machine learning model using the signal data as input to generate a corresponding data structure, and (c) update the world model based on the corresponding data structure.

Additional features and advantages of the invention will be made apparent from the following detailed description of illustrative embodiments that proceeds with reference to the accompanying drawings.

### BRIEF DESCRIPTION OF THE DRAWINGS

The foregoing and other aspects of the present invention are best understood from the following detailed description when read in connection with the accompanying drawings. For the purpose of illustrating the invention, there are shown in the drawings embodiments that are presently preferred, it being understood, however, that the invention is not limited to the specific instrumentalities disclosed. Included in the drawings are the following Figures:
FIG. 1 illustrates the workflow associated with training a ML model for structure detection, according to some embodiments;
FIG. 2 provides a workflow that shows how the ML Model can be deployed and used, according to some embodiments;
FIG. 3 illustrates an example computer-implemented method for planning of motions to lift objects using a robot system, according to some embodiments;
FIG. 4 shows an example architecture of a system for performing autonomous operations in an operating environment comprising a plurality of objects, according to some embodiment; and
FIG. 5 shows an alternative example architecture of a system for performing autonomous operations in an operating environment comprising a plurality of objects, according to some embodiments.

### DETAILED DESCRIPTION

Systems, methods, and apparatuses are described herein which relate generally to generating learned knowledge from an executable domain model. More particularly, the techniques described herein can be applied to generate data structures that describe objects in a complex scene in a manner that this description can be applied to controllable physical equipment. For an autonomous system, it is important that the system recognizes not only its own state but the states of objects in its vicinity. Knowing a state from an external source such as from camera vision can be used to corroborate one's own state (e.g., "is the robot in the correct pose?") as well as knowledge from external devices ("is the door of the machine being tended opened or closed?").

The model for the physical state comprises bodies, kinematic constraints between bodies, and the extant geometry of the bodies. In some embodiments, the state model further comprises mass, force, velocities, and other dynamics properties. These structures can be learned from a camera input that is simulated from the autonomous machine's model. The focus would be on the devices being tended for which the acting machine's model is only speculative and needs to be verified. Also, new objects that enter the scene but are not part of the application, such as a wayward human hand, can also be trained for recognition. Once structured physical models can be generated, these objects can be used as input to other learned ML functions. From this inferred data, a scene can be summarized and used to answer questions about the environment. For example, a question can be answered whether a door is open or closed or whether a part is already loaded into the tended machine.

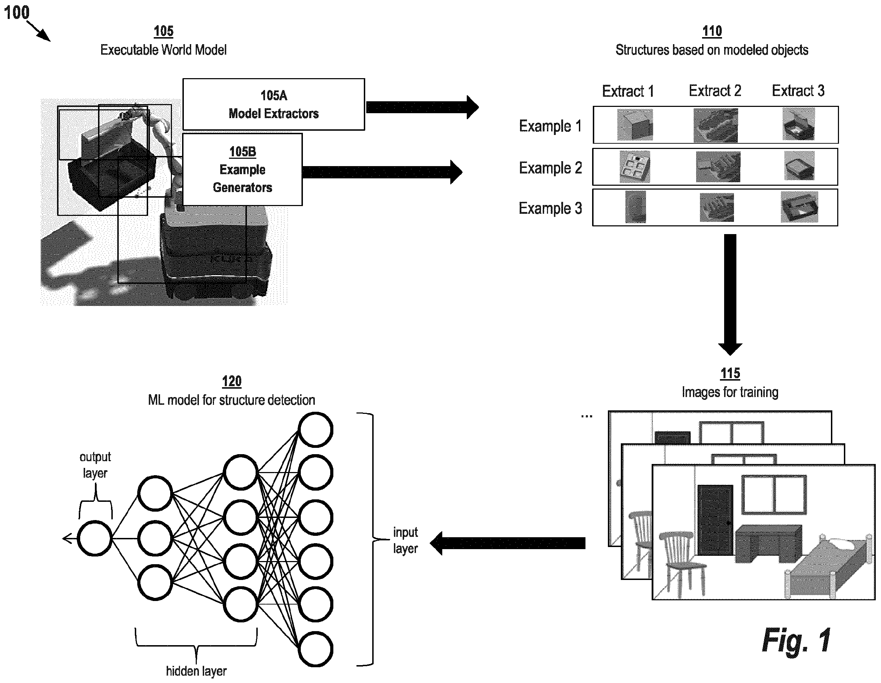

FIG. 1 illustrates the workflow 100 associated with training a ML model 120 for structure detection, according to some embodiments. Briefly, to produce the input values for the ML Model 120, a world model (WM) 105 is used to synthetize a plurality of scenes depicting the operating environment. For example, WM 105 can simulate an environment, such as a room with a door and some furniture, and then generate a projection of this environment onto the virtual camera's field of perception. In other words, the WM 105 can generate an image as it would appear to the camera from its position. In fact, WM 105 can generate a multitude of such images for different situations, from different angles and positions. The ML Model 120 can then learn from such images to identify various objects (e.g., doors, windows, chains, door handles, etc.) as they are produced by the discrimination function and specify their position in the workspace.

This workflow 100 starts with the creation of the WM 105. This WM 105 comprises physical, geometric, electronic, and procedural data corresponding to objects in the operating environment. The structure of the WM 105 has sufficient detail to be able to execute the model in a simulation of the operating environment. This detail includes, for example, definitions to start and run objects in simulation as well as functions for updating the structure of the WM at engineering and run time. Various algorithms within the autonomous system can use the data to perform planning that allows the system to create new behaviors to handle unforeseen situations.

In some embodiments, the WM 105 has moving bodies for each independently moving element including the devices themselves as well as all the work products. For example, a robotic device can be modeled as each independently moving arm and the flange. A gripper attached to the robot can have each part of the grip modeled along with sensors to detect that the force on the gripper is changing and to sense the presence of an object being gripped. Bodies are assembled with kinematic objects as a graph. For a robot, the bodies may be attached with rotational joints for each axis of motion. The positions are accurate, and the robot provides functions for forward and inverse kinematics.

The WM 105 may also include knowledge about bodies in the operating environment. This knowledge may include, for example, the distribution of mass and collision surfaces. This allows the system to model how a device such as a robot will experience a heavy load or to calculate the forces being applied to a surface. Knowledge about drives and motors may also include forces, velocities, accelerations, etc.

As shown in FIG. 1, the WM 105 is analyzed to determine Structures 110 based on objects modeled in the WM 105. Conceptually, these Structures 110 can be understood to be a matrix where the columns are a group of extracted model components and the rows corresponding to example scenarios where the extracted model components are used. However, other techniques may be used for organizing the components and examples. Each example can be thought of as a scene. For example, a scene may be a room with a box that needs to be opened. In each example, there are different objects. Because the WM generated these objects, it knows exactly where these objects are in the operating environment and the characteristics of each object.

The general goal is to attempt to train the ML Model 120 to produce values or perhaps whole networks of objects in the WM 105. To do this, the WM 105 includes functions to generate run-throughs of the automation behavior for making examples. These functions are collectively shown in FIG. 1 as the Example Generators 105B. The WM 105 also includes discrimination functions to pick out networks of WM objects that are critical for the current task being learned. These discrimination functions are referred to in FIG. 1 as the Model Extractors 105A.

The Model Extractors 105A do not learn but instead select the result that the learning is intended to achieve. In a physical running system, it would not be possible to know what the final structure of the objects being viewed is meant to be, but in the simulated world the objects are known because they are being used to generate the input images. However, not all objects in the WM 105 would be visible to the perception system. Therefore, the Model Extractors 105A determine which WM objects are relevant for the current configuration of objects in the example. One might, for instance, restrict the objects to be learned to only be those that are visible from the perspective of the input camera or other sensor. Thus, in this example, the Model Extractors 105A could analyze the placement of a camera and use ray tracing or similar techniques to determine if particular objects in the scene are visible. For each visible object, the Model Extractors 105A provide a list of the objects and the relevant characteristics stored in the WM 105 (e.g., position, type, functional characteristics, etc.). The data can be extracted using any technique known in the art. For example, in one embodiment, the Model Extractors 105A produce a file in Extensible Markup Language (XML), or a similar file format. The XML file includes a textual description of each component, its coordinates within the operation environment, its functions, etc.

The Example Generators 105B execute the WM 105 with different inputs such that the examples provide a desired coverage of multiple perspectives. In the WM 105, the modeled objects can be configured to the state the actual machine is in because the modeled objects are sufficiently descriptive to model those states in simulation. Thus, for a given object, the Example Generators 105B can use the WM 105 to analyze the object's different states and configurations. For example, a door would be moved to different states of opened, closed, and in between. Work pieces can be generated and put through the devices. In some embodiments, the Example Generators 105B also produces error situations. For example, the door might be only half open or ajar. It is important for a perception system to be able to detect the unusual cases as well as expected events in the main sequence of operations.

Although the examples can be generated randomly with different permutations of objects, in most embodiments, the Example Generators 105B apply some form of intelligence to identify examples that are likely to occur in real-world scenarios. In one embodiment, the Example Generators 105B apply templates that develop examples based on the functional behavior of the objects. For example, a robot arm can move a work piece between different areas of the work environment. Examples can be generated with the work piece starting at various locations in the operating environment, with instructions to place it at various other points in locations in the operating environment. As another example, the Example Generators 105B may simulate a task in a room from a plurality of different angles around the room. For example, in the first simulation, the camera may be placed at a particular location and the Model Extractors can extract the relevant information on the objects from that perspective. The camera can then be moved to different positions for subsequent simulations and the process is repeated until the entire room is covered (e.g., 360 degrees of coverage where the camera is moved by 1 degree on each iteration).

Aside from a description of objects and their corresponding characteristics, each example includes signal data to show how a particular scene would appear if measured with particular sensors. In the example of FIG. 1, these signals take the form of Images 115; however other types of signals can be used in other embodiments (e.g., acoustic signals).

Finally, the ML Model 120 is trained using the Structures 110 and Images 115. Specifically, the ML Model 120 is trained to output extracted object information based on input images. For example, in one embodiment, the ML Model 120 outputs a data structure that lists each object in an input image, and characteristics for each object (type, location, size, functional behavior, etc.). The technique for training of ML Model 120 will depend on the type of model employed. For example, in some embodiments, the model may be based on object detection architecture known in the art such as Single Shot Multibox Detector (SSD), Region-Based Fully Convolutional Networks (R-FCN), and Faster Regional Convolutional Neural Networks (RCNN). Moreover, existing Application Programming Interfaces (APIs) such as Google's TensorFlow Object Detection API can be used for rapid development and deployment of models. Techniques for implementing and training ML models based on object detection architectures are generally known in the art, and thus not described herein in detail.

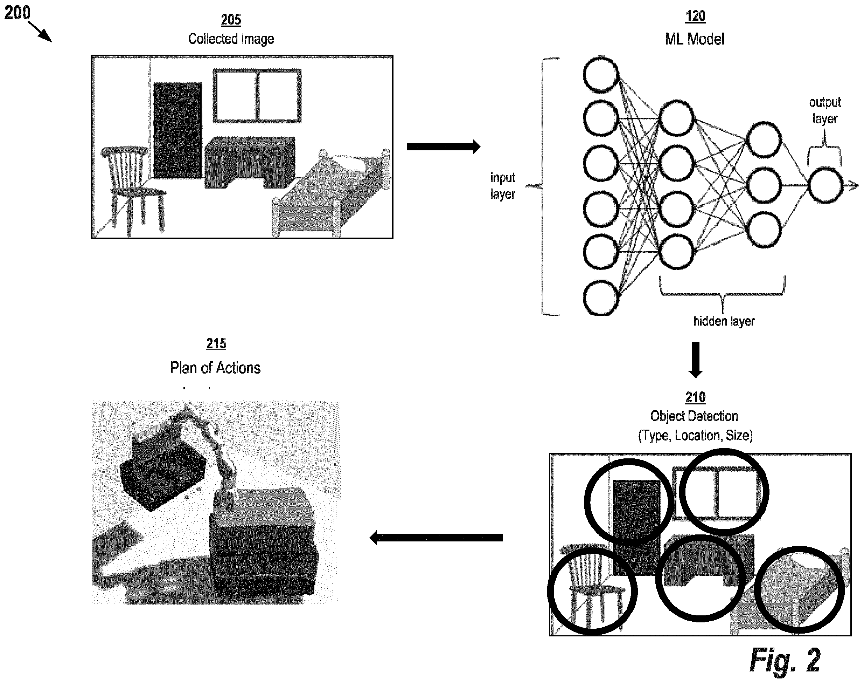

FIG. 2 provides a workflow 200 that shows how the ML Model 120 can be deployed and used, according to some embodiments. Image 205 is captured using, for example, a camera mounted on a robot or other autonomous device. This Image 205 is used as input to the ML Model 120 to generate a data structure describing objects in the Image 205. The data structure is analyzed to identify Objects 210 in the Image 205 and to discern the characteristics associated with the object. Then, the automation system develops a Plan of Action 215 for interacting with objects in the environment. For example, in one embodiment, each autonomous device in the operating environment has a WM for understanding its operating environment. The data provided by the ML Model 120 can be used to enhance this information with detailed object data. In turn, this detailed object data is used by an application executing on the device to perform one or more assigned tasks.

Because the system can determine much of its own behavior, the system integrator needs not specify as many details about the process. For example, using the information provided by the trained ML Model 120, a device can open the door of a milling machine, place in a work part, and activate the machine using instructions at the highest level of abstraction. That is, the user only needs to instruct the robot to open the door and not physically grab the robot's arm and teach it the motion of opening the door.

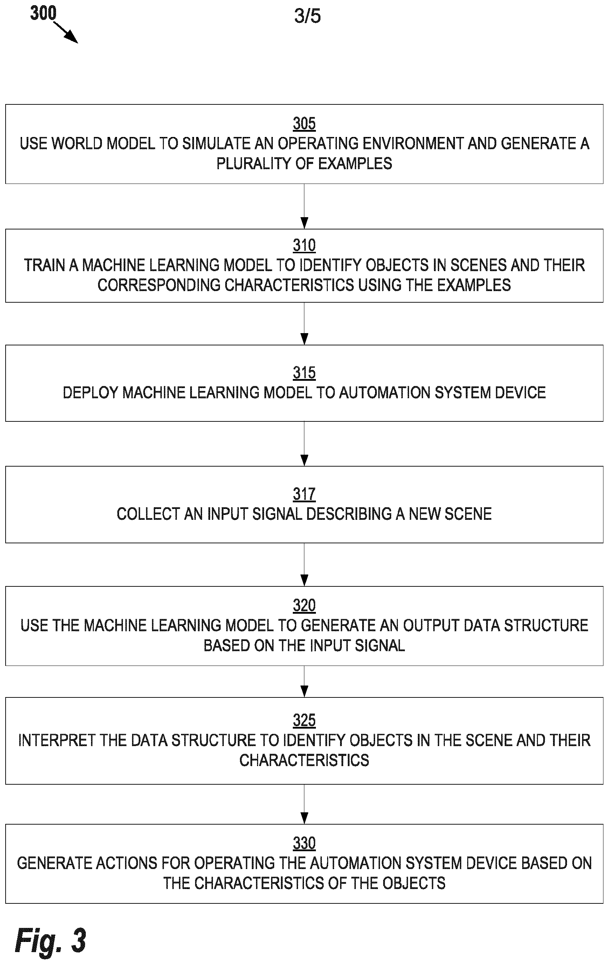

FIG. 3 illustrates an example computer-implemented method 300 for planning of motions to lift objects using a robot system, according to some embodiments. Starting at step 305, an executable world model is used to simulate an operating environment to generate a plurality of examples. Each example describes a particular scene that may occur within the operating environment. The scene is described from the perspective of signal data acquired using one or more sensors in the operating environment. For example, in some embodiments, the signal data is image data acquired using a camera. In other embodiments, the signal data is an audio signal acquired using a microphone. Other types of signal data may also be used including, without limitation, temperature signals, vibration signals, pressures/texture or other tactile input sensor signals, multimodal/hyperspectral image signals, etc. It should also be noted that the signal data may incorporate signals from multiple types of sensors. Because the operating environment is simulated, the signal data can be considered from various perspectives. For example, for image data, the signal data can be acquired from multiple angles by changing the camera placement between simulations.

Aside from the signal data describing the scene, the examples generated at step 305 may include an indication of the objects present in the scene, and a description of characteristics associated with the object. These characteristics may include, for example, coordinates identifying the position of the object, a description of the object's size, and list of functional characteristics. The functional characteristics describe how the object can be interacted with by autonomous devices. For example, a door object may include characteristics indicating that it can be opened by pulling a particular area on the door, and the door can be closed by pushing the particular area.

At step 310, a ML model is trained to identify objects in scenes, and their corresponding characteristics, based on input signal data. More specifically, the examples generated at step 305 are used as training data. The signal data is used as the inputs, while the rest of the information in the example is used as output. The output of the ML Model may be organized in a data structure to enable easy parsing and use by other software components. Various data structures known in the art may be used for organizing the output data including, without limitation, graphs, an instance of a class (i.e., an "object"), arrays, and lists. For example, in one embodiment, the data structure is a graph of objects linked together to form descriptions of physical and logical structures.

Once trained, the ML model is deployed to a computing environment accessible to the autonomous devices. In some embodiments, the ML model is deployed to local memory on the automation device itself. In other embodiments, the ML model may be deployed to a server computer accessible to the automation devices via a network connection. For example, in one embodiment, the ML model is deployed to a server computer in a cloud-based computing environment accessible via the Internet.

At step 315, the machine learning model is deployed and, at step 317, an autonomous device receives an input signal describing a new scene. In some embodiments, the autonomous device collects this input signal and uses one or more on-board sensors (e.g., cameras). In other embodiments, the signal can be provided by a sensor external to the autonomous device. Next, at step 320, the autonomous device uses the ML model to generate an output data structure based on the input signal. Conceptually, this can be understood as capturing data associated with a scene and using it to understand the objects in the scene. With the techniques described herein, this understanding comes in the form of a data structure output by the ML model. At 325, the ML model is interpreted to identify one or more objects. For example, the data structure may be an instance of a class that can be queried to determine a list of objects present in the observed scene. As noted above, the data structure also includes the characteristics of each object. To continue with the previous example, each object itself may be an instance of a class that can be queried to determine the characteristics associated with the object.

At step 330, one or more actions for operating the autonomous device are generated based on the characteristics associated with the identified object. For example, a robot may identify a door object in a scene based on an image captured from an on-board camera. The ML model may be used to determine that the door can be opened and closed. Then, robot may use this information to move to the door and operate it as needed. Under this paradigm, the robot can operate with a minimal set of instructions. That is rather needing to be explicitly told where things are located and how the environment should be navigated to perform a task, the robot can merely be provided with the task itself and decide, based on the information provided by the ML model, how to interact with objects in the operating environment.

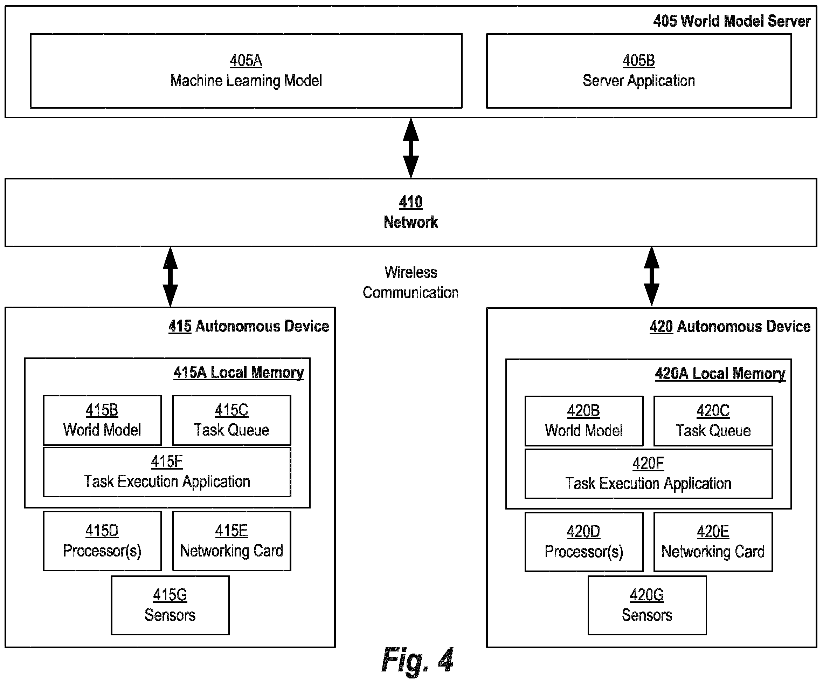

FIG. 4 shows an example architecture of a system for performing autonomous operations in an operating environment comprising a plurality of objects, according to some embodiments. The World Model Server 405 shown in FIG. 4 is a computer that comprises a non-transitory computer readable medium storing a ML Model 405A that is trained to generate data structures comprising objects and object characteristics based on signal data. In some embodiments, the World Model Server 405 is constructed using a parallel processing architecture that is optimized for performing ML-based operations over multiple processors.

The World Model Server 405 also includes a Server Application 405B. The Server Application 405B is an executable software application that facilitates communications with the Autonomous Devices 415, 420. Various techniques may be applied to provide relevant data to the Autonomous Devices 415, 420. For example, Autonomous Device 415 may be assigned a new task (either via the Server Application 405B or from another application executing on another computer system not shown in FIG. 4) that requires use of a particular object. In some embodiments, upon receiving a new task, the Autonomous Device 415 captures signal data from the operating environment via Sensors 415G and sends that data to the Server Application 405B using an on-board Networking Card 415E to retrieve the aforementioned data structure with object data. In other embodiments, the Autonomous Device 415 may periodically capture images and send them to the ML Model 405A for processing. Thus, the World Model Server 405 need not be aware of the tasks being executed, and it can focus on efficiently executing the ML Model 405A. In still other embodiments, the Server Application 405B may monitor Sensors 415G on the Autonomous Device 415 to collect signals and push object data to the Autonomous Device 415 as it interacts with the operating environment. Autonomous Device 420 can operate in a similar manner using Sensors 420G.

The World Model Server 405 connects to the Autonomous Devices 415, 420 over Network 410. Network 410 may be any network or system generally known in the art, including the Internet, an intranet, a local area network (LAN), a wide area network (WAN), a metropolitan area network (MAN), a direct connection or series of connections, a cellular telephone network, or any other network or medium capable of facilitating communication between the Autonomous Devices 415, 420 and the World Model Server 405. The network 410 may be wired, wireless or a combination thereof. Wireless connections may be implemented using Wi-Fi, WiMAX, and Bluetooth, infrared, cellular networks, satellite or any other wireless connection methodology generally known in the art. Additionally, several networks may work alone or in communication with each other to facilitate communication in the Network 410.

Each Autonomous Device 415, 420 includes a non-transitory computer readable medium, referred to as Local Memory 415A, 420A in FIG. 4. Each respective Local Memory 415A, 420A stores a local world model 415B, 420B that comprises (at least initially) sparse representations of the objects in the operating environment. The term "sparse," as used herein refers to representations of the objects that include less (and often much less) information than needed to completely understand the operating environment. For example, a sparse representation of the objects may include two dimensional representations of the object without any characteristics or using generic markers that only provide limited information (e.g., location). As data structures are received from the ML Model 405A, the object data can be used to supplement the information in the local world model 415B, 420B. In some instances the local world model 415B, 420B may be entirely empty with respect to a particular operating environment. In this case, the ML Model 405A would be effectively used to construct the local world model 415B, 420B based on the signal data collected by each Autonomous Device 415, 420.

Each Autonomous Device 415, 420 in this example also includes a Task Queue 415C, 420C. A Task Execution Application 415F, 420F removes and executes tasks from Task Queues 415C, 420C during operations. Each Autonomous Device 415, 420 includes one or more Processors 415D, 420D for using the World Models 415B, 420B to execute their respective tasks. Finally, as noted above, each Autonomous Device 415, 420 have a Networking Card 415E, 420E that facilitates communications with the World Model Server 405, and possibly other computing systems, via the Network 410. The type and functionality of each Networking Card 415E, 420E can vary according to the protocols supported by Network 410; however, in general, any type of networking card known in the art may be utilized. In some embodiments, as an alternative to having the Networking Card 415E, 420E located in the Autonomous Device 415, 420, networking is performing while the Autonomous Device 415, 420 is in a dock (not shown in FIG. 4). That is, the dock would be used to receive data from the World Model Server 405, and load that data into the Local Memory 415A, 420A of the Autonomous Device 415, 420.

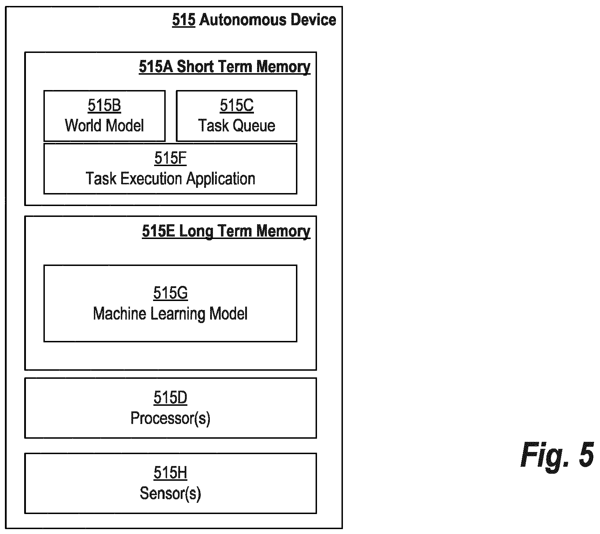

FIG. 5 shows an alternative example architecture of a system for performing autonomous operations in an operating environment comprising a plurality of objects, according to some embodiments. As with the example shown in FIG. 4, the system includes an Autonomous Device 515 with a Short Term Memory 515A (i.e., a local memory) that holds a World Model 515B, a Task Queue 515C, and a Task Execution Application 515F. One or more Processors 515D execute tasks in the Task Queue 515C using the World Model 515B. In contrast to the system shown in FIG. 4, the ML Model 515G is stored in a Long Term Memory 515E (e.g., a database) in the Autonomous Device 515 and executed locally by the Autonomous Device 515. When executing a new task requiring use of a particular object in the operating environment, the Autonomous Device 515 captures signal data via Sensors 515H and uses this signal data as input to the ML Model 515G. The resulting data structure is then used to update the World Model 515B.

The embodiments of the present disclosure may be implemented with any combination of hardware and software. In addition, the embodiments of the present disclosure may be included in an article of manufacture (e.g., one or more computer program products) having, for example, computer-readable, non-transitory media. The media has embodied therein, for instance, computer readable program code for providing and facilitating the mechanisms of the embodiments of the present disclosure. The article of manufacture can be included as part of a computer system or sold separately.

While various aspects and embodiments have been disclosed herein, other aspects and embodiments will be apparent to those skilled in the art. The various aspects and embodiments disclosed herein are for purposes of illustration and are not intended to be limiting, with the true scope and spirit being indicated by the following claims.

Unless stated otherwise as apparent from the following discussion, it will be appreciated that terms such as "applying," "generating," "identifying," "determining," "processing," "computing," "selecting," or the like may refer to the actions and processes of a computer system, or similar electronic computing device, that manipulates and transforms data represented as physical (e.g., electronic) quantities within the computer system's registers and memories into other data similarly represented as physical quantities within the computer system memories or registers or other such information storage, transmission or display devices. Embodiments of the methods described herein may be implemented using computer software. If written in a programming language conforming to a recognized standard, sequences of instructions designed to implement the methods can be compiled for execution on a variety of hardware platforms and for interface to a variety of operating systems. In addition, embodiments of the present invention are not described with reference to any particular programming language. It will be appreciated that a variety of programming languages may be used to implement embodiments of the present invention.

An executable application, as used herein, comprises code or machine readable instructions for conditioning the processor to implement predetermined functions, such as those of an operating system, a context data acquisition system or other information processing system, for example, in response to user command or input. An executable procedure is a segment of code or machine readable instruction, sub-routine, or other distinct section of code or portion of an executable application for performing one or more particular processes. These processes may include receiving input data and/or parameters, performing operations on received input data and/or performing functions in response to received input parameters, and providing resulting output data and/or parameters.

The functions and process steps herein may be performed automatically or wholly or partially in response to user command. An activity (including a step) performed automatically is performed in response to one or more executable instructions or device operation without user direct initiation of the activity.

The system and processes of the figures are not exclusive. Other systems, processes and menus may be derived in accordance with the principles of the invention to accomplish the same objectives. Although this invention has been described with reference to particular embodiments, it is to be understood that the embodiments and variations shown and described herein are for illustration purposes only. Modifications to the current design may be implemented by those skilled in the art, without departing from the scope of the invention. As described herein, the various systems, subsystems, agents, managers and processes can be implemented using hardware components, software components, and/or combinations thereof. No claim element herein is to be construed under the provisions of 35 U.S.C. 112(f) the element is expressly recited using the phrase "means for."

### Further Embodiments

1. A computer-implemented method for performing autonomous operations in an operating environment, the method comprising:
   simulating the operating environment to generate a plurality of examples, wherein each example comprises (a) signal data describing a scene, (b) one or more objects present in the scene, and (c) a description of characteristics associated with the objects;
   training a machine learning model using the examples to generate a data structure comprising (i) objects associated with a signal and (ii) characteristics corresponding to the objects associated with the signal;
   collecting, by a signal sensor of an autonomous device, an input signal describing a new scene;
   using the machine learning model to generate an output data structure based on the input signal;
   identifying one or more objects using the output data structure; and
   generating one or more actions for operating the autonomous device based on the characteristics associated with the identified objects.
2. The method of embodiment 1, wherein the operating environment is simulated using an executable world model simulation that comprises one or more moving bodies for each moving object in the operating environment.
3. The method of embodiment 2, wherein at least one moving object is a simulated autonomous device using at least a first moving body and a second moving body.
4. The method of embodiment 3, wherein the simulated autonomous device is a robotic device and the first moving body is a robotic arm and the second moving body is a flange.
5. The method of embodiment 2, wherein at least one moving object is a work product.
6. The method of embodiment 1, wherein the signal data describing the scene comprises an image.
7. The method of embodiment 1, wherein the signal data describing the scene comprises one or more of: an audio signal, a temperature signal, a vibration signal, a signal from a tactile input sensor, or a multimodal hyperspectral image signal.
8. The method of embodiment 1, wherein the characteristics associated with the objects comprise an object location.
9. The method of embodiment 1, wherein the characteristics associated with the objects comprise an object type.
10. The method of embodiment 1, wherein the characteristics associated with the objects comprise a description of functional behavior.
11. A system for performing autonomous operations in an operating environment comprising a plurality of objects, the system comprising:
   a server computer executing a machine learning model trained to generate a data structure comprising (i) objects associated with a signal and (ii) characteristics corresponding to the objects associated with the signal;
   an autonomous device comprising:
      a non-transitory computer readable medium storing a world model used by the autonomous device to tasks requiring use of at least one of the objects, and
      one or more sensors for collecting signal data describing a scene associated with the operating environment;
      a networking card for connecting to the server computer, and
      a processor configured to (a) send the signal data to the server computer, (b) receive a corresponding data structure generated by the machine learning model from the server computer, and (c) update the world model based on the corresponding data structure.
12. The system of embodiment 11, wherein the signal data describing the scene comprises an image.
13. The system of embodiment 11, wherein the signal data describing the scene comprises one or more of: an audio signal, a temperature signal, a vibration signal, a signal from a tactile input sensor, or a multimodal hyperspectral image signal.
14. The system of embodiment 11, wherein the characteristics associated with the objects comprise an object location.
15. The system of embodiment 11, wherein the characteristics associated with the objects comprise an object type.
16. The system of embodiment 11, wherein the characteristics associated with the objects comprise a description of functional behavior.
17. A system for performing autonomous operations in an operating environment comprising a plurality of objects, the system comprising:
   an autonomous device comprising:
      one or more sensors for collecting signal data describing a scene associated with the operating environment;
      a long-term non-transitory computer readable medium storing a machine learning model trained to generate a data structure comprising (i) objects associated with a signal and (ii) characteristics corresponding to the objects associated with the signal;
      a short-term non-transitory computer readable medium storing a world model that comprises sparse representations of the objects in the operating environment,
      a processor configured to (a) execute the machine learning model using the signal data as input to generate a corresponding data structure, and (c) update the world model based on the corresponding data structure.
18. The system of embodiment 17, wherein the signal data describing the scene comprises an image.
19. The system of embodiment 17, wherein the signal data describing the scene comprises an audio signal.

## Claims

1. A computer-implemented method for performing autonomous operations in an operating environment, the method comprising:
simulating the operating environment to generate a plurality of examples, wherein each example comprises (a) signal data describing a scene, (b) one or more objects present in the scene, and (c) a description of characteristics associated with the objects;
training a machine learning model using the examples to generate a data structure comprising (i) objects associated with a signal and (ii) characteristics corresponding to the objects associated with the signal;
collecting, by a signal sensor of an autonomous device, an input signal describing a new scene;
using the machine learning model to generate an output data structure based on the input signal;
identifying one or more objects using the output data structure; and
generating one or more actions for operating the autonomous device based on the characteristics associated with the identified objects.

2. The method of claim 1, wherein the operating environment is simulated using an executable world model simulation that comprises one or more moving bodies for each moving object in the operating environment.

3. The method of claim 2, wherein at least one moving object is a simulated autonomous device using at least a first moving body and a second moving body,
wherein the simulated autonomous device is in particular a robotic device and the first moving body is a robotic arm and the second moving body is a flange.

4. The method of claim 2, wherein at least one moving object is a work product.

5. The method of one of the preceding claims, wherein the signal data describing the scene comprises an image.

6. The method of one of the preceding claims, wherein the signal data describing the scene comprises one or more of: an audio signal, a temperature signal, a vibration signal, a signal from a tactile input sensor, or a multimodal hyperspectral image signal.

7. The method of one of the preceding claims, wherein the characteristics associated with the objects comprise an object location and/or
an object type and/or
a description of functional behavior.

8. A system for performing autonomous operations in an operating environment comprising a plurality of objects, the system comprising:
a server computer executing a machine learning model trained to generate a data structure comprising (i) objects associated with a signal and (ii) characteristics corresponding to the objects associated with the signal;
an autonomous device comprising:
a non-transitory computer readable medium storing a world model used by the autonomous device to tasks requiring use of at least one of the objects, and
one or more sensors for collecting signal data describing a scene associated with the operating environment;
a networking card for connecting to the server computer, and
a processor configured to (a) send the signal data to the server computer, (b) receive a corresponding data structure generated by the machine learning model from the server computer, and (c) update the world model based on the corresponding data structure.

9. The system of claim 8, wherein the signal data describing the scene comprises an image.

10. The system of claim 8, wherein the signal data describing the scene comprises one or more of: an audio signal, a temperature signal, a vibration signal, a signal from a tactile input sensor, or a multimodal hyperspectral image signal.

11. The system of one of the claims 8 to 10, wherein the characteristics associated with the objects comprise an object location and/or
an object type and/or
a description of functional behavior.

12. A system for performing autonomous operations in an operating environment comprising a plurality of objects, the system comprising:
an autonomous device comprising:
one or more sensors for collecting signal data describing a scene associated with the operating environment;
a long-term non-transitory computer readable medium storing a machine learning model trained to generate a data structure comprising (i) objects associated with a signal and (ii) characteristics corresponding to the objects associated with the signal;
a short-term non-transitory computer readable medium storing a world model that comprises sparse representations of the objects in the operating environment,
a processor configured to (a) execute the machine learning model using the signal data as input to generate a corresponding data structure, and (c) update the world model based on the corresponding data structure.

13. The system of claim 12, wherein the signal data describing the scene comprises an image.

14. The system of claim 12, wherein the signal data describing the scene comprises an audio signal.
